# EUROPEAN PATENT APPLICATION

(11) **EP 2 819 446 A1**
(43) Date of publication of application: **31.12.2014**
(21) Application number: 13305893.3
(22) Date of filing: 27.06.2013
(51) Int. Cl.: H04W 12/08, H04W 12/04, H04L 29/06, H04W 4/00

(54) **Method of supplying a M2M device with secret data**

(71) Applicant: Gemalto SA, 92190 Meudon (FR)
(72) Inventor: Garnier, Thierry, 13420 Gemenos (FR)

(57) **Abstract**

The invention is a method of supplying a M2M device with a secret data. The method comprises the step of providing a portable secure device containing the secret data, a communication interface and a pairing means able to send a pairing key via the communication interface, the step of storing the pairing key in the portable secure device, the step of establishing a connection between the communication interface and the M2M device by placing the portable secure device near the M2M device, the first time the connection is established, the step of sending the pairing key from the pairing means to the M2M device via the connection and permanently disabling the capability to send the pairing key, the step of establishing a secure channel between the portable secure device and the M2M device only if the M2M device comprises the pairing key and the step of sending the secret data to the M2M device through the secure channel.

## Description

### (Field of the invention)

The present invention relates to methods of supplying a Machine-to-Machine (M2M) device with secret data. It relates particularly to methods of supplying M2M device with credentials associated to a service managed by a distant server.

### (Background of the invention)

Machine-to-Machine (also named M2M) domain refers to technologies which allow devices to communicate with one another over wireless or wired networks. A M2M device may include a sensor or a meter and store consumption data which need to be sent to a distant server assigned to the management of a fleet of M2M devices deployed on the field. The M2M devices are seen as clients of the distant server. The communication between M2M devices and M2M servers requires security mechanisms in order to guarantee confidentiality and integrity of the exchanged data. Such security mechanisms allow checking that a M2M device and a distant server are authorized to communicate to each other. For establishing a secure communication channel with a distant server, specific credentials must be previously stored into the M2M device. When a M2M device is manufactured, the type of M2M application may remain unknown. At this stage, the future server in charge of the management of the M2M device remains unknown and the corresponding credentials cannot be stored into the M2M device. There is a need for securely provisioning M2M devices with specific secret data after issuing.

### (Summary of the Invention)

An object of the invention is to solve the above mentioned technical problem.

The object of the present invention is a method of supplying a M2M device with a secret data. The method comprising the steps of:
- providing a portable secure device containing the secret data, a communication interface and a pairing means which has a capability to send a pairing key via the communication interface,
- storing the pairing key in the portable secure device,
- establishing a connection between the communication interface and the M2M device by placing the portable secure device near the M2M device,
- the first time said connection is established, sending the pairing key from the pairing means to the M2M device via the connection and permanently disabling the capability to send the pairing key, and
- establishing a secure channel between the portable secure device and the M2M device only if said M2M device comprises the pairing key and sending the secret data to the M2M device through the secure channel.

Advantageously, the method may comprise the further steps:
- providing the portable secure device with a second secret data,
- establishing a second secure channel between the portable secure device and the M2M device only if said M2M device comprises the pairing key, and
- sending said second secret data from the portable secure device to the M2M device through the second secure channel.

Advantageously, the secret data may be credentials allocated to a distant server, the M2M device may establish a secure session with the distant server using the secret data and the M2M device may enroll at the distant server through the secure session.

Advantageously, the pairing key may be generated in the portable secure device the first time said connection is established.

Advantageously, the pairing means may be permanently disabled at the initiative of the portable secure device.

Another object of the invention is a portable secure device containing a secret data, a communication interface, a pairing key, a pairing means, a first connecting means able to establish a connection between the communication interface and a M2M device only if the portable secure device is placed near the M2M device. The portable secure device contains a second connecting means able to establish a secure channel between the portable secure device and the M2M device using the pairing key and a provisioning means able to send the secret data to the M2M device through the secure channel. The pairing means has a capability to send the pairing key via the communication interface once only the first time that the connection is established. The portable secure device contains a disabler means configured to permanently disable the capability to send the pairing key as soon as the pairing key is sent to the M2M device. The second connecting means is configured to establish the secure channel only if the M2M device contains the pairing key. The provisioning means is configured to send the secret data to the M2M device through the secure channel only once.

Advantageously, the portable secure device may comprise a generator means configured to generate the pairing key the first time that the connection is established.

Advantageously, the portable secure device may comprise a communicating means able to receive a second secret data. The second connecting means may be configured to establish a second secure channel only if the M2M device contains the pairing key and to send the second secret data to the M2M device through said second secure channel only once.

Another object of the invention is a system comprising a portable secure device as described above, a M2M device and a distant server. The M2M device comprises a first interface configured to communicate with the distant server and a second interface configured to communicate with the communication interface of the portable secure device. The distant server comprises a session means configured to establish a secure session with the M2M device only if the M2M device comprises the secret data.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of a M2M device and a portable secure device before the pairing phase according to the invention;
- Figure 2 is an example of a M2M device and a portable secure device after the pairing phase according to the invention;
- Figure 3 depicts a first example of a system comprising a distant server, a M2M device and a portable secure device according to the invention; and
- Figure 4 depicts a second example of a system comprising a distant server, a M2M device and a portable secure device according to the invention.

### (Detailed description of the preferred embodiments)

The invention may apply to any types of M2M device intended to securely connect one or several servers when deployed on the field. The M2M device may be coupled to a host machine like a vehicle, a meter, a slot machine, a TV or a computer.

The invention relies on a one-shot pairing (i.e. which cannot be repeated) of a M2M device with a portable secure device, placed close to each other, to share a pairing key which allows establishing a secure channel prior of exchanging a secret data provided by the portable secure device.

An advantage of the invention is to securely provide a custom personalization of credentials in a M2M device at any step of the life cycle of the M2M device. In particular, the invention allows a flexible management of credentials which is compatible with massive scale deployment of M2M devices.

Another advantage of the invention is to allow the manufacturing and stocking of large numbers of undifferentiated M2M devices (with the possible exception of serial number) which may be customized in a second step.

Another advantage of the invention is to prevent the portable secure device to be reused for being paired with another device (thief proof).

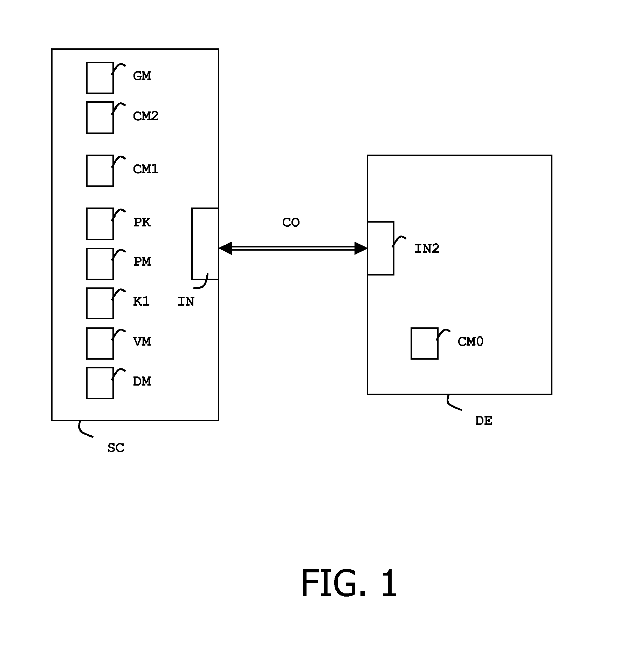

**Figure 1** shows an example of a M2M device DE and a portable secure device SC before the pairing phase according to the invention.

In this example, the M2M device DE is a Machine-to-Machine module comprising a communication interface IN2 adapted to communicate with the portable secure device SC. For instance, the communication interface IN2 may be a contactless interface. The M2M device DE is able to store data and comprises a connecting means CM0 configured to establish a connection with the portable secure device SC.

The portable secure device SC comprises a communication interface IN adapted to communicate with the M2M device DE, a secret data K1 intended to be securely transferred to the M2M device DE, a first connecting means CM1 adapted to establish a connection CO between the communication interface IN and the communication interface IN2 of the M2M device DE only if the portable secure device SC is placed near the M2M device DE. For instance, the communication interface IN may be a contactless interface able to communicate at a short range only. The communication interface IN may comply with NFC (Near Field Communication) technology.

Alternatively, the communication interfaces IN and IN2 may work in contact mode. For instance, the portable secure device SC may be plugged into M2M device DE.

In both cases, the portable secure device SC is placed in proximity to the M2M device DE, either physically connected or connected via a short-range wireless communication. The proximity between the two devices ensures that the transferred pairing key is neither spied nor stolen.

The portable secure device SC comprises a pairing means PM which has a capability to send the pairing key PK via the communication interface IN once only. Preferably, the pairing means PM is configured to send the pairing key PK only the first time that the connection CO is established (i.e. one-shot pairing).

The portable secure device SC comprises a disabler means DM configured to permanently disable the capability of the pairing means PM to initiate any new pairing if one pairing is already engaged with a given M2M device.

In one embodiment, the disabler means DM is adapted to irreversibly disable the pairing means PM as such. In another embodiment, the disabler means DM is adapted to still disable the pairing means PM as said, however under out-of-band secure procedure and context, the disabler means DM is able to re-engage the pairing means PM as initially. In any case, once the pairing means PM is disabled, no new pairing can be initiated. The portable secure device SC comprises a second connecting means CM2 adapted to establish a secure channel CH1 between the portable secure device SC and the M2M device DE only if the M2M device DE comprises the pairing key PK. The portable secure device SC comprises a provisioning means VM configured to send the secret data K1 to the M2M device DE through the secure channel CH1.

In one embodiment, the provisioning means VM is configured to send the secret data K1 only once.

In another embodiment, the provisioning means VM can send the secret data K1 to the M2M device DE as many times as necessary. For instance, the M2M device can request the secret data K1 to the portable secure device SC a soon as it needs to establish a secure connection with a distant server. Such an embodiment allows changing dynamically the value of the secret data K1 assuming that the new value is sent to the portable secure device SC and known by the distant server.

In the example of Figure 1, the portable secure device SC comprises a generator means GM adapted to generate the pairing key PK when needed. Alternatively, the pairing key PK may be generated outside the portable secure device SC and stored in the portable secure device SC during a previous personalization step.

The portable secure device SC may be a hardware secure token like a smart card, a SD © card or a secure USB token.

The connection CO is established without security mechanism since the M2M device is assumed to be an on-the-shelf device devoid of customized data.

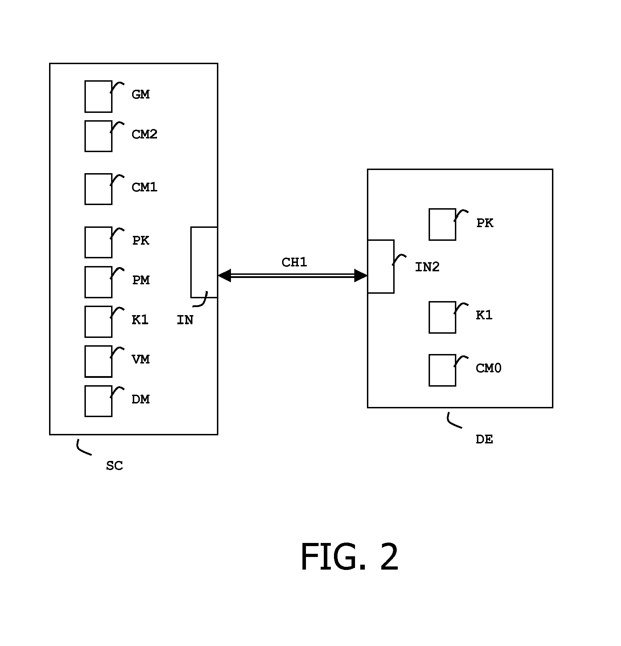

**Figure 2** shows an example of a M2M device DE and a portable secure device SC after the pairing phase according to the invention.

In this example, the M2M device DE and the portable secure device SC are similar to those described at Figure 1.

Once the initial connection CO has been established, the pairing key PK was transmitted to the M2M device DE which has registered this pairing key PK. At this stage, the pairing means PM is no more able to send the pairing key PK again. Then a secure channel CH1 has been established between the M2M device DE and the portable secure device SC and the secret data K1 was sent to the M2M device DE which has stored the secret data K1.

Advantageously, the provisioning means VM is no more able to send the secret data K1 to any device except the one paired.

The secure channel CH1 may be implemented using security mechanisms based on the pairing key PK which are well known in smart card domain.

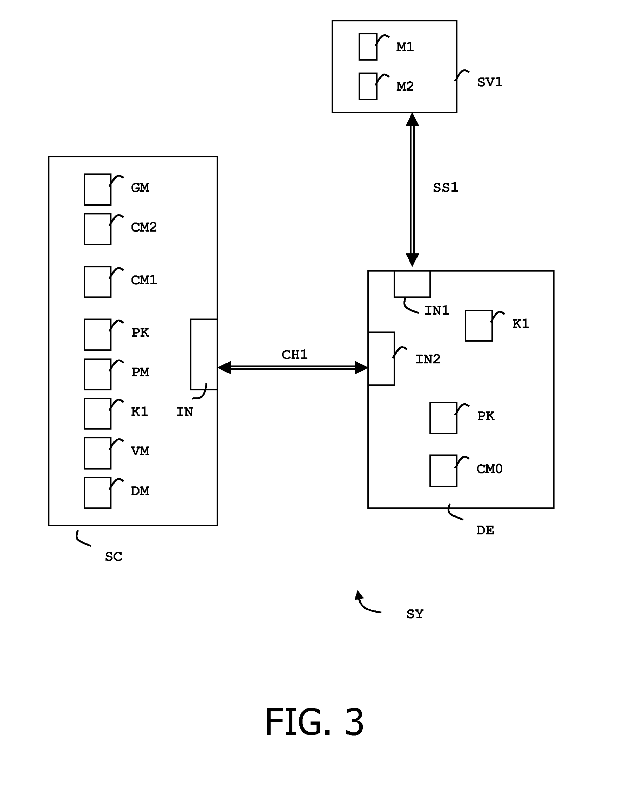

**Figure 3** shows an example of a system SY comprising a distant server SV1, a M2M device DE and a portable secure device SC according to the invention.

In this example, the M2M device DE and the portable secure device SC are similar to those described at Figure 2.

The M2M device DE comprises a communication interface IN1 adapted to communicate with the distant server SV1. For instance, M2M device DE may be able to connect the server SV1 using an Over-The-Air session (like a Telecom session) or through wired session, via a communication network like Internet.

The distant server SV1 comprises a session means M1 which is configured to establish a secure session SS1 with the M2M device DE only if the M2M device DE comprises the secret data K1. In other words, the secret data K1 corresponds to credentials required for accessing the distant server SV1. These credentials may correspond to a right to access a specific service or subscription managed by the distant server SV1.

The secure session SS1 may be implemented using security mechanisms well known in Telecom or Internet domains. For instance, the secure session SS1 may be based on a session key computed from the secret data K1 which is assumed to be known by the server SV1.

The distant server SV1 comprises a manager means M2 which is configured to remotely manage the M2M device DE. The M2M device DE is able to successfully and securely connect the distant server SV1. Thus, the M2M device DE may enroll at the server SV1 or exchange applicative data with the distant server SV1. For instance, the M2M device may register with the server SV1, receive a set of applications corresponding to its subscription and periodically send measured data to the server SV1. The server SV1 is able to securely update/install new firmware/software in the M2M device DE, to securely monitor the performance of the M2M device DE or to manage capabilities of the M2M device DE.

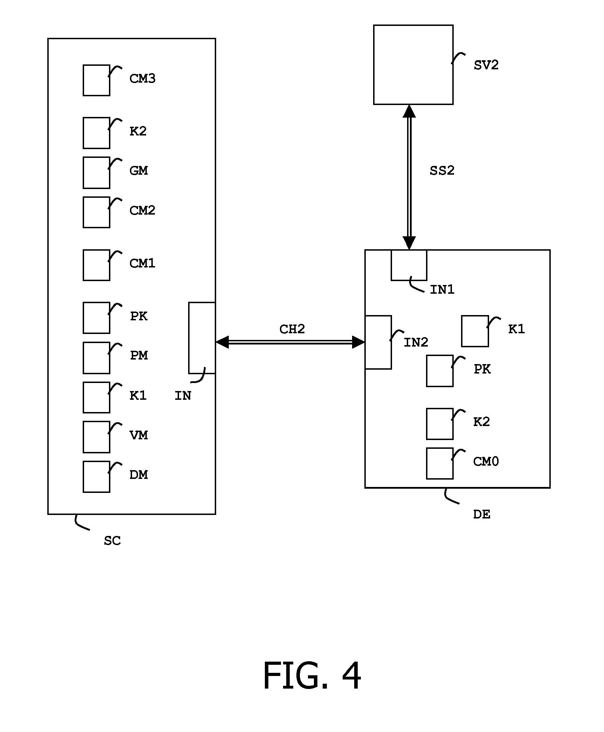

**Figure 4** shows another example of a system comprising a distant server SV2, a M2M device DE and a portable secure device SC according to the invention.

In this example, the M2M device DE and the portable secure device SC are similar to those described at Figure 2 with the following differences. The portable secure device SC comprises a third connecting means CM3 adapted to establish a secure channel with a distant machine (not shown) intended to provide a second secret data K2. For instance, the portable secure device SC is able to get the second secret data K2 through a Telecom session. The second secret data K2 may be conveyed via a Secured Command Packet (GSM 3.48) through SMS to the portable secure device SC for example. Alternatively, the second secret data K2 may be stored in the portable secure device SC during a previous step of personalization.

The second connecting means CM2 may establish a second secure channel CH2 between the portable secure device SC and the M2M device DE since the M2M device DE already comprises the pairing key PK. Then the provisioning means VM may securely send the second secret data K2 to the M2M device DE thanks to the second secure channel CH2. Such a second secret data K2 may correspond to an additional service managed by a second distant server SV2. Thus the M2M device DE may establish a second secure session SS2 with the distant server SV2 using the second secret data K2.

The invention allows provisioning M2M devices with specific credentials even when M2M devices are deployed on the field. This solution avoids the tedious and heavy operation of customization of the M2M devices in factory or in a point of sell.

The invention enables M2M device customization and services configuration in a remote and secure fashion.

Thanks to the invention, further secret data may be automatically deployed in the M2M device DE via the portable secure device SC. This supplying capability remains available even if the portable secure device SC has been removed from the M2M device DE, provided that the portable secure device SC connects again to the relevant M2M device DE.

An advantage of the invention is to guarantee that the secret data K1 is not distributed to several M2M devices even if the portable secure device SC connects another M2M device after connecting the M2M device DE.

In another embodiment, the portable secure device SC may comprises several pairing keys; each pairing key being associated to a secret data. Each time a pairing key is transferred to a M2M device, the portable secure device SC gets an identifier of this M2M device, allocates this pairing key to the identifier, establishes a secure channel with the M2M device DE, transfers the corresponding secret data and permanently disable the capability of the pairing means PM to send this pairing key. Thus a unique portable secure device SC is able to supply to each M2M device of a M2M device set a dedicated pairing key and a secret data.

## Claims

1. A **method** for supplying a M2M device (DE) with a secret data (K1), said method comprising the steps:
- providing a portable secure device (SC) containing said secret data (K1), a communication interface (IN) and a pairing means (PM) having a capability to send a pairing key (PK) via said communication interface (IN),
- storing the pairing key (PK) in the portable secure device (SC),
- establishing a connection (CO) between the communication interface (IN) and the M2M device (DE) by placing the portable secure device (SC) near the M2M device (DE),
**characterized in that** said method comprises the following steps:
- the first time said connection (CO) is established, sending the pairing key (PK) from the pairing means (PM) to the M2M device (DE) via said connection (CO) and permanently disabling the capability to send the pairing key (PK),
- establishing a secure channel (CH1) between the portable secure device (SC) and the M2M device (DE) only if said M2M device (DE) comprises the pairing key (PK) and sending the secret data (K1) to the M2M device (DE) through the secure channel (CH1).

2. A method according to claim 1, wherein said method comprises the further steps:
- providing the portable secure device (SC) with a second secret data (K2),
- establishing a second secure channel (CH2) between the portable secure device (SC) and the M2M device (DE) only if said M2M device (DE) comprises the pairing key (PK),
- sending said second secret data (K2) from the portable secure device (SC) to the M2M device (DE) through the second secure channel (CH2).

3. A method according to claim 1, wherein said secret data (K1) is credentials allocated to a distant server (SV1), wherein the M2M device (DE) establishes a secure session (SS1) with the distant server (SV1) using said secret data (K1) and wherein the M2M device (DE) enrolls at the distant server (SV1) through the secure session (SS1).

4. A method according to claim 1, wherein the pairing key (PK) is generated in the portable secure device (SC) the first time said connection (CO) is established.

5. A method according to claim 1, wherein the pairing means (PM) is permanently disabled at the initiative of the portable secure device (SC).

6. A **portable secure device** (SC) containing a secret data (K1), a communication interface (IN), a pairing key (PK), a pairing means (PM), a first connecting means (CM1) able to establish a connection (CO) between the communication interface (IN) and a M2M device (DE) only if the portable secure device (SC) is placed near the M2M device (DE), a second connecting means (CM2) able to establish a secure channel (CH1) between the portable secure device (SC) and the M2M device (DE) using said pairing key (PK) and a provisioning means (VM) able to send the secret data (K1) to the M2M device (DE) through the secure channel (CH1),
**characterized in that** the pairing means (PM) has a capability to send the pairing key (PK) via said communication interface (IN) once only the first time that the connection (CO) is established,
**in that** the portable secure device (SC) contains a disabler means (DM) configured to permanently disable the capability to send the pairing key (PK) as soon as the pairing key (PK) is sent to the M2M device (DE),
**in that** second connecting means (CM2) is configured to establish the secure channel (CH1) only if the M2M device (DE) contains the pairing key (PK) and **in that** the provisioning means (VM) is configured to send the secret data (K1) to the M2M device (DE) through the secure channel (CH1) only once.

7. A portable secure device according to claim 6 and comprising a generator means (GM) configured to generate the pairing key (PK) the first time that the connection (CO) is established.

8. A portable secure device according to claim 6, wherein the portable secure device (SC) comprises a communicating means (CM3) able to receive a second secret data (K2) and wherein said second connecting means (CM2) is configured to establish a second secure channel (CH2) only if the M2M device (DE) contains the pairing key (PK) and to send the second secret data (K2) to the M2M device (DE) through said second secure channel (CH2) only once.

9. A **system** (SY) comprising a portable secure device (SC), a M2M device (DE) and a distant server (SV1), wherein the portable secure device (SC) is according to claim 6, the M2M device (DE) comprises a first interface (IN1) configured to communicate with the distant server (SV1) and a second interface (IN2) configured to communicate with the communication interface (IN) of the portable secure device (SC) and wherein the distant server (SV1) comprises a session means (M1) configured to establish a secure session (SS1) with the M2M device (DE) only if said M2M device (DE) comprises the secret data (K1).
